# EUROPEAN PATENT SPECIFICATION

(11) **EP 1 135 663 B1**
(45) Date of publication and mention of the grant of the patent: **15.02.2006**
(21) Application number: 99970856.3
(22) Date of filing: 09.11.1999
(51) Int. Cl.: F41H 1/00

(54) **METHOD AND APPARATUS FOR DEFEATING HIGH-VELOCITY PROJECTILES**
METHODE UND VORRICHTUNG ZUR UNSCHÄDLICHMACHUNG VON HOCHGESCHWINDIGKEITSPROJEKTILEN
PROCEDE ET DISPOSITIF PERMETTANT DE METTRE EN ECHEC DES PROJECTILES ANIMES D'UNE GRANDE VITESSE

(30) Priority: 09.11.1998 US 189105; 30.04.1999 US 302734
(43) Date of publication of application: 26.09.2001
(60) Divisional application: 04255559.9
(73) Proprietor: Pinnacle Armor, LLC., Fresno, California 93755 (US)
(72) Inventor: Neal, Murray L., Fresno, CA 93727 (US); Bain, Allan D., Oceanside, CA 92056 (US)
(74) Representative: Gilmour, David Cedric Franklyn
(86) International application number: PCT/US1999/026575
(87) International publication number: WO 2000/033013

(56) References cited:
- WO-A-88/06413
- WO-A-91/06823
- US-A- 3 563 836
- US-A- 3 867 239
- US-A- 5 196 252
- US-A- 5 515 541

## Description

### BACKGROUND OF THE INVENTION

### (1) Field of the Invention

The invention relates to protective wear. More specifically, the invention relates to flexible body armor designed to defeat high-velocity projectiles.

### (2) Background

Advances in body armor are frequently related to development of improved materials from which the armor is formed. In recent years, ballistic resistant materials formed from high tensile strength fibers, such as aramid fibers or polyethylene fibers, have gone into common use in the field. Unfortunately, soft body armor, even with these advanced materials, has proven insufficient to thwart even armor-piercing pistol ammunition, sharp thrusting implements, and circular penetrators, all of which are now in common use.

To address this problem, various hard metal plating systems have been developed. One such system employs a number of titanium discs one inch in diameter and 0.813mm-1.27mm (.032-.050 inches) in thickness laid out in overlapping rows such that in the interior of a row, a disk overlaps its predecessor in the row and is overlapped by its successor in the row. Subsequent rows overlap their predecessor and are overlapped by their successor. The coin layout is then attached to a substrate such as adhesive impregnated aramid fabric. A second layer of adhesive impregnated aramid may be used to envelope the "plate" formed by the coins. This enveloped plate can be attached to conventional soft body armor over vital organs. It provides good flexibility and is thin enough to conceal.

Similarly, U.S. Patent Nos. 3,563,836, which forms the basis of the preamble of claim 1, and 5,196,252 disclose projectile resistant armor comprising a plurality of non-milled plates affixed to the surface of a flexible substrate. The plates are then adjacently affixed to the flexible substrate. The plate layered substrates may then be layered one on top of the other to create an overlapping plate configuration. Additional substrate layers are used to encase the plate layers and create a projectile resistant armor.

While this overlapping of the coins and plates has been shown to spread the force effectively to defeat most existing armor-piercing pistol rounds, sharp thrusting implements, and circular penetrators, unfortunately, rifle rounds continue to tear through this plating structure, as well as the underlying soft body armor like a hot knife through butter. Thus, for protection from rifle rounds, users have been required to employ large rigid plates to shield the vital organs. These large plates are heavy and inflexible, and generally uncomfortable to use. Additionally, they are next to impossible to use in a concealed manner. Efforts to employ the coin design with thicker disks have failed to yield a commercially viable product to defeat rifle rounds. Thicker disks result in less flexibility and do not lay out well. The result is a plating structure thicker, no more flexible, and heavier than the solid plates discussed above. Wearer comfort is also a premium concern in body armor production. Accordingly, these limitations make such a structure impractical as a commercial product.

In view of the foregoing, it would be desirable to have a flexible armoring system that would defeat high-velocity projectiles, such as rifle rounds.

### BRIEF SUMMARY OF THE INVENTION

A method and apparatus for defeating high-velocity projectiles is disclosed in claims 1 and 10. In a preferred embodiment a plurality of disks of equal size and having a thickness greater than 2.54mm (100") are milled in a plurality of places, with each milled place having a radius of curvature approximately equal to the radius of curvature of the disk. The disks are then laid out in an imbricated pattern row by row such that each disk in a row is in substantially a straight line with the other disks in the row and overlaps a milled place of a disk in a row above its row and has its milled place overlapped by a disk in the row below its row. The imbricated pattern is then adhered to a flexible, high tensile strength substrate and overlaid by a second high tensile strength layer such that the imbricated pattern is enveloped between the substrate and the second layer. The envelope is then coupled to a soft body armor backing.

In an alternative embodiment of a method and apparatus for defeating high-velocity projectiles there is disclosed a plurality of disks of equal size comprised of fiber induced ceramic composites are provided. The disks are laid out in an imbricated pattern row by row such that each disk in a row is in substantially a straight line with the other disks in the row and overlaps a segment of a disk in an adjacent row. The imbricated pattern is then adhered to a flexible, high tensile strength substrate and overlaid by a second high tensile strength layer such that the imbricated pattern is enveloped between the substrate and the second layer. The envelope is then coupled to a soft body armor backing.

### BRIEF DESCRIPTION OF THE DRAWINGS

Figure 1 is a cutaway schematic of a suit of body armor of one embodiment of the instant invention.
Figure 2 is a perspective diagram of the layout of disks in one embodiment of the invention.
Figure 3 is a diagram of an imbricated pattern adhered to a substrate.
Figure 4 is a diagram of enveloping the imbricated pattern between a substrate and an additional layer.
Figure 5 is a perspective view of a disk of an alternative embodiment of the invention.
Figure 6 is a sectional view of the disk of the embodiment of Figure 5.
Figure 7 is a perspective view of a disk of a second alternative embodiment of the invention.
Figure 8 is a cross-sectional view of the disk of the embodiment of Figure 7.
Figure 9 is a frontal view of one embodiment of body armor.
Figure 10 is a cutaway view of one embodiment of the body armor.
Figure 11 is a side cutaway cross-sectional view of one embodiment of the body armor.
Figure 12 is a perspective view of one disk embodiment.
Figure 13 is a perspective view of the disk embodiment of Figure 4 with an epoxy modified resin and Eglass coating.
Figure 14 is a sectional view of the disk embodiment of Figure 5 illustrating the coatings.
Figure 15 is a perspective view of one disk embodiment.
Figure 16 is a sectional view of one disk embodiment.

### DETAILED DESCRIPTION OF THE INVENTION

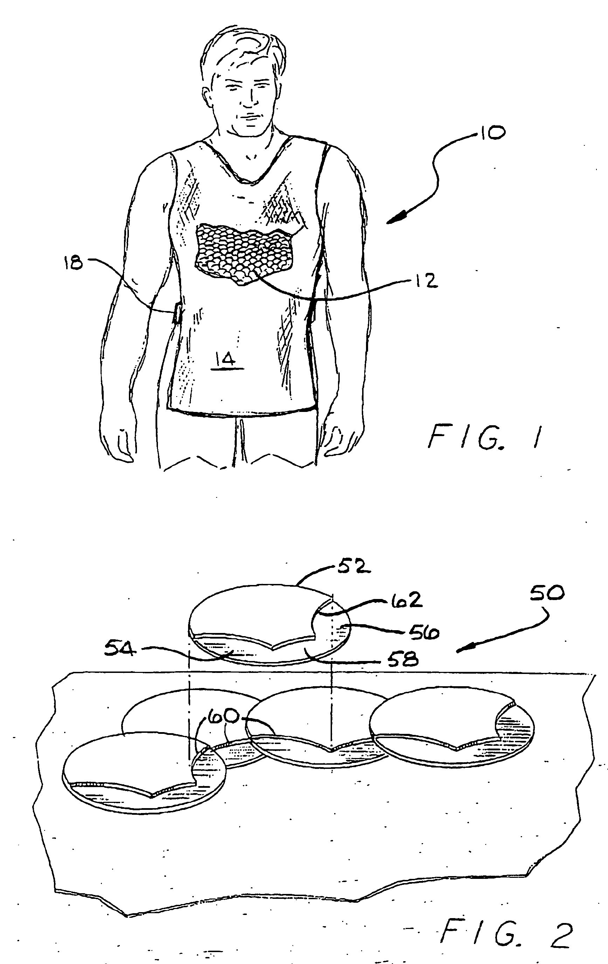

Figure 1 is a cutaway schematic of a suit of body armor of one embodiment of the instant invention. The body armor 10 covers a user's torso and is designed to protect the vital areas from high-velocity projectiles. Through appropriately laying out disks in an imbricated pattern, the overall body armor 10 remains flexible and also provides good protection against high velocity projectiles. Unlike the 10 x 12 rigid plates of the prior art, the imbricated pattern can flex around body contours and is therefore considerably more comfortable and also more readily concealable. The imbricated pattern 12 is typically sandwiched between two layers of fabric 14 made of high tensile strength fibers, such as aramid fibers or polyethylene fibers. The fabric 14 should be tear and cut resistant and is preferrably ballistic grade material designed to reduce fragmentation. This fabric 14 can be adhesive impregnated, thus, the adhesive on the fabric adheres to the disks that compose the imbricated pattern 12 and retains their relative position. One or more additional layers of the fabric 14 may be added to the sandwich. This will be discussed further below.

Underlying the imbricated pattern 12 that is sandwiched between two or more layers of tear and cut resistant fabric layers 14 is conventional soft body armor 16. A high-velocity projectile is deemed defeated even if it penetrates the plating of the imbricated pattern and all fabric layers if it does not penetrate the underlying soft body armor or cause backside deformation of greater than 44mm (1.73"), as backside deformation is defined by the National Institute of Justice (NIJ). Attachment straps, such as strap 18, couple a front panel of the body armor 10 to a back panel of the body armor 10 in a standard manner. Attachment strap 18 could be any conventional strapping common in the industry.

Figure 2 is a perspective diagram of the layout of disks in one embodiment of the invention. In this case, the disks are laid out from left to right. Each subsequent row is also laid out left to right. It has been found that switching from left to right, then to right to left, creates weakness in the resulting pattern that often causes failure. Figure 2 shows only part of two rows of the ultimate imbricated pattern. Disks within each row form a substantially straight line. Because the disks overlap, each disk has a slight slope relative a line normal to the layout surface. Additionally, each disk is rotated slightly such that a line through the center of a row in conjunction with an axis bisecting the milled arc of the central milled place is not at a right angle. In one embodiment, this angle is approximately 60°. A typical disk 52 is shown raised above its eventual placement in the pattern 50. Disk 52 is typically of a high hardness material, having a hardness of greater than 450 Brinell. Many suitable materials exist, including high carbon steel, stainless steel, steel alloys, and various titanium alloys. A preferred material is marketed under the trademark Mars 300™, and is available from Creusot-Loure Industries, a division of Creusot Marrel of France. Mars 300™ typically has a hardness of 630-650 Brinell. Another suitable material is sold under the trademark BP 633™ by Astralloy of Birmingham, Alabama. Most suitable materials are sold in sheets. Mars 300™ is purchased in sheets having a thickness of approximately .168". The individual disks must be cut from the sheets. This can be accomplished by plasma cutting, laser cutting, or water jet cutting, depending on the material used. "Cutting" as used herein (when unmodified) refers generically to any technique by which a disk is produced.

In one embodiment, disk 52 is laser-cut using a conventional laser technology to ensure a uniform diameter and smooth edge as between multiple disks. Water jet cutting could be used but is not believed to be as good as laser cutting. Plasma cutting would also be possible but would then require additional deburring and smoothing steps to achieve the same edge smoothness. After cutting each disk 52 is milled; disk 52 is milled in three places--a left milled place 54, a central milled place 58, and a right milled place 56. This milling can be performed in any order.

In one embodiment, each milled place is milled in multiple passes. For example, the left milled place 54 is taken down to approximately half the eventual mill depth. The same half depth milling is then performed on the right milled place 56 followed by the central milled place 58. Then a second pass is performed to bring the mill depth down to approximately its final depth. A final high speed polishing pass is then performed to ensure a smooth finish for each of the milled places.

Typically, disk 52 has a radius between 1/2" and 2". Longer radii reduce flexibility but also manufacturing cost. In a currently preferred embodiment, a 1" radius is employed. Depending on the material, disks having thicknesses between .080" and .187" may be used. The radius of curvature of each milled place is approximately identical to the radius of the disk 52. Thus, if disk 52 has a one-inch radius, each milled place, left milled place 54, central milled place 58, and right milled place 56 also has a 1" radius of curvature. The depth of the milling is typically .040"-.080" for disks between .100" and .187" in thickness.

Each milled place has a "mill distance." Mill distance is defined as used herein to be the perpendicular distance between the edge of disk 52 and the apex of the milled place 54, 56, 58. In one embodiment, the right and left milled places 54, 56 have the same mill distance which on a 1" radius disk is .540". The central milled place has a mill distance of .50 on a 1" radius disk. It is important that when laid out in the imbricated pattern, three disks so laid define an arc 60 into which an additional disk may be placed. Notably, a disk seated in arc 60 may only abut the milled edge 62 of the disks whose right and left milled place it overlays. This will depend on the depth of the milling. In one embodiment, the milled edge 62 has a slight slope as opposed to being exactly perpendicular to the milled surface. This reduces cracking of the disk during a ballistic event and reduces wear on the milling equipment.

While in one embodiment, all disks are identical to disk 52, this leads to a number of milled places along ending edges (e.g., the right edge and the bottom if a left to right layout is used or conversely, the left edge and bottom if a right to left layout is used). The pieces fit together neatly and there is no significant gap between overlapping disks. The overlap of the shown pattern has been found to effectively spread the force of a high-velocity projectile hit to adjacent disks, thereby preventing penetration and backside deformation. The edges on which disks have milled places not overlapped by another disk are deemed outside the "zone of protection" provided by the armor.

Additionally, because of the slight tilt of each disk in the pattern, a perpendicular hit is very unlikely and some of the energy will be absorbed in deflection. Finally, during the ballistic event, the hardness of the disk material tends to expand or blunt the tip of the projectile, causing a further reduction in its piercing ability. Notably, the layout can be made in any shape so that the zone of protection conforms to the torso or other vital area.

In an alternative embodiment, special finishing disks may be used with fewer milled places to ensure that all milled places are overlapped by a full thickness disk. For example, a bottom row of disks may be milled only to allow overlap of an adjacent disk in the bottom row, e.g., only having a right milled place (for a left to right layout), and since no other disk will overlap the disks in the bottom row, this will avoid thin spots in the bottom row.

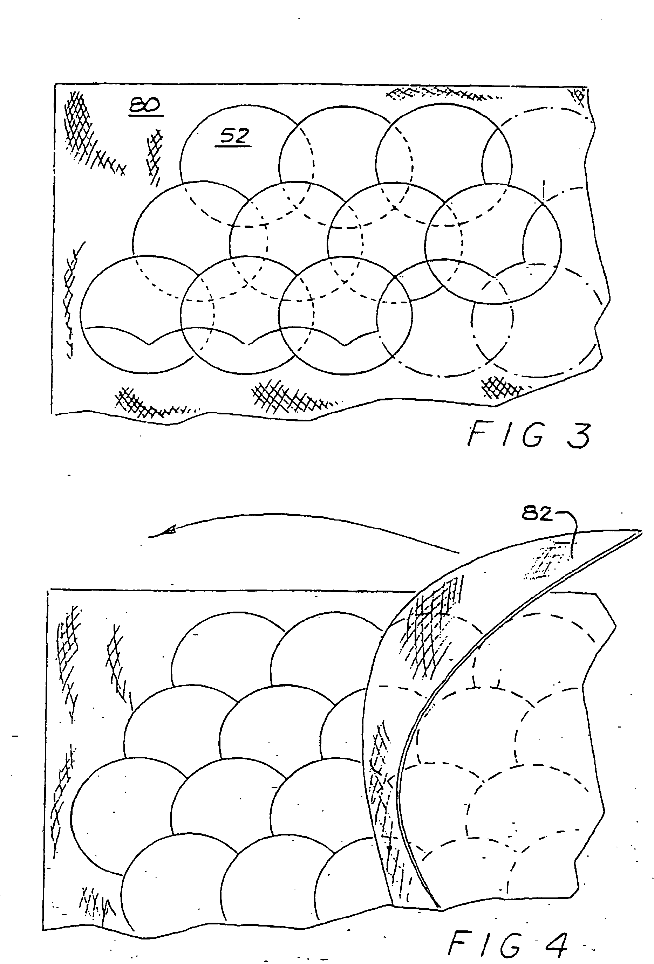

Figure 3 shows an imbricated pattern of disks 52 coupled to a substrate 80. As previously discussed, substrate 80 could be an adhesive impregnated polyethylene or aramid fiber fabric. Suitable fabrics include the fabric sold under the trademark SPECTRA® by AlliedSignal of Morristown, New Jersey, TWARON® microfiliment by Akzo-Nobel of Blacklawn, Georgia, SB31 and SB2, sold under the trademark DYNEEMA, by DSM of Holland, PBO sold under the trademark ZYLON® by Toyobo of Tokyo, Japan, KEVLAR® or PROTERA® by E.I. Dupont de Nemours & Company of Chattanooga, Tennessee. Other suitable fabrics will occur to one of ordinary skill in the art.

Some suitable substrates are available with an aggressive adhesive coating covered by a release paper. In addition to being aggressive, it is important that the adhesive once cured remains flexible to reduce separation of the disks and substrate during a ballistic event. The substrate of a desired size may be cut and the release paper peeled back to expose the adhesive surface. The disk can then be laid out directly onto the adhesive which retains them in position relative to one another. Because the substrate is flexible and the disks flex about their intersection, the combined unit is flexible. Alternatively, the pattern may be laid out and the substrate adhered over the top.

As shown in Figure 4, the next step is to place another layer of this adhesive coated flexible substrate on the other side of the hand laid coins to secure them in a flexible position that does not change when the panel is flexed, such that although each coin will pivot off the adjacent coins, the actual position of each coin remains substantially in the same place it was laid. This second layer of adhesive fabric used to envelop the imbricated pattern provides further staying power, thereby reducing the risk that a disk will shift and the body armor will fail.

The NlJ defines various levels of threat. A level three threat is a full metal jacket 7.62 x 51 millimeter 150 grain round traveling at 2700-2800 feet/second. It has been found that the above-disclosed invention will defeat level three and all lesser threats. Additional layers of the adhesive coated flexible substrate material may be added to either side in any proportion (i.e. it is within the scope and contemplation of the invention to have more substrate layers on one side of the plate than the other side of the plate) in multiple layers to achieve different performance criteria. Some situations benefit from allowing the coins to move slightly during the ballistic event, while others make it desirable that the coin remain as secure in place as possible.

In an alternative embodiment of the invention, a "dry" high tensile strength flexible substrate is provided. It is then coated with a flexible bonding agent, for example, a silicon elastomer resin. The disks may then be laid out as described above. The bonding agent is then cured to flexibly retain the relative locations of the disks. A similarly coated layer can be used to sandwich the plate from the opposite side. It is also within the scope and contemplation of the invention to use one layer with a flexible bonding agent while a facing layer is of the peel and stick variety described above. As used herein, "adhesive impregnated substrate" refers to suitable flexible high tensile strength material having an adhesive disposed on one side, whether commercially available with adhesive in place or coated later as described above.

In yet another embodiment, an adhesive impregnated substrate is created by either above described method and the (sandwiching) layer is non-adhesive and merely coupled to the underlying substrate about the periphery of the plate. This will somewhat degrade the retension of the disk as compared to sandwiching between adhesive layers. Accordingly, this configuration will not survive as many hits and the front layer attached about the periphery serves primarily as a spall shield.

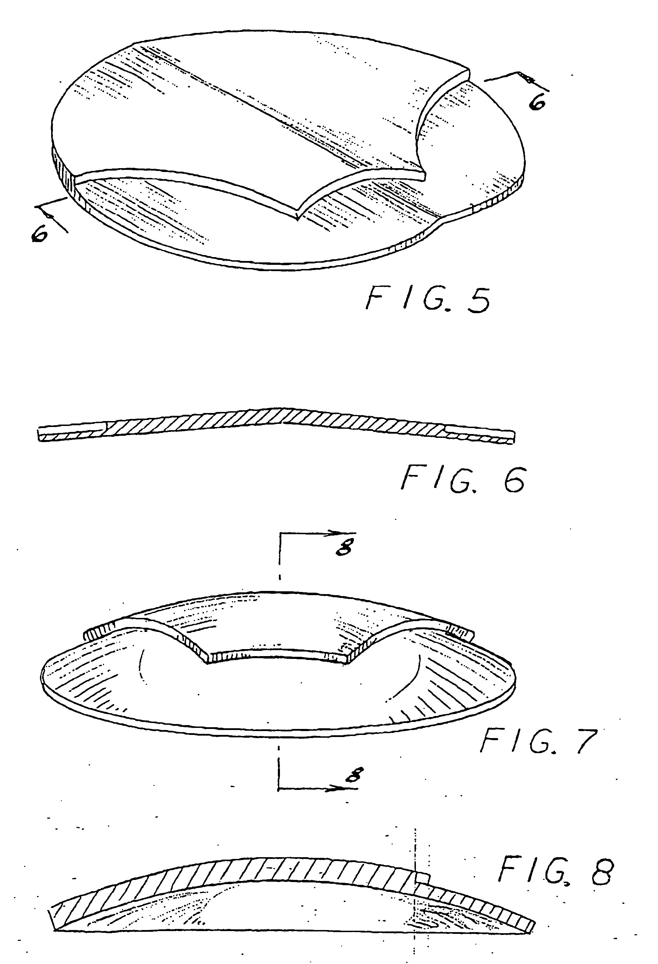

Figure 5 is a perspective view of a disk of a second alternative embodiment of the invention. In this embodiment, a flat disk is prepared in the normal manner and then curved slightly about an axis bisecting the arc of the central milled place. The bend will typically range from 2° to 15° off the horizontal, depending on the dimensions and curvature of the area to be protected by the armor. This embodiment is most suitable where large disks, e.g., having a radius of 50.8mm (2") are used as the slight curve, allowing the disks to better match the contours of the body. This is desirable with large disks because the larger disks imply reduced flexibility of the overall assembly. Therefore, from a comfort standpoint, it is desirable to have a disk curved to accommodate body contour and motion. For disks of a radius 1" or less, such bending is deemed unnecessary and undesirable. Figure 6 is a cross-sectional view of the disk of the embodiment of Figure 5.

Figure 7 is a perspective view of a disk of an alternative embodiment of the invention. In this embodiment, the disk is prepared as described above. After milling but prior to layout, a press is used to concave the disk from the backside which causes the disk to be convex in the direction of the milled surface. Figure 8 is a sectional view of the disk of the embodiment of Figure 7. In this view, the concavity is clearly evident. This disk design may have improved deflection characteristics over the flat disk and also may improve comfort for some wearers.

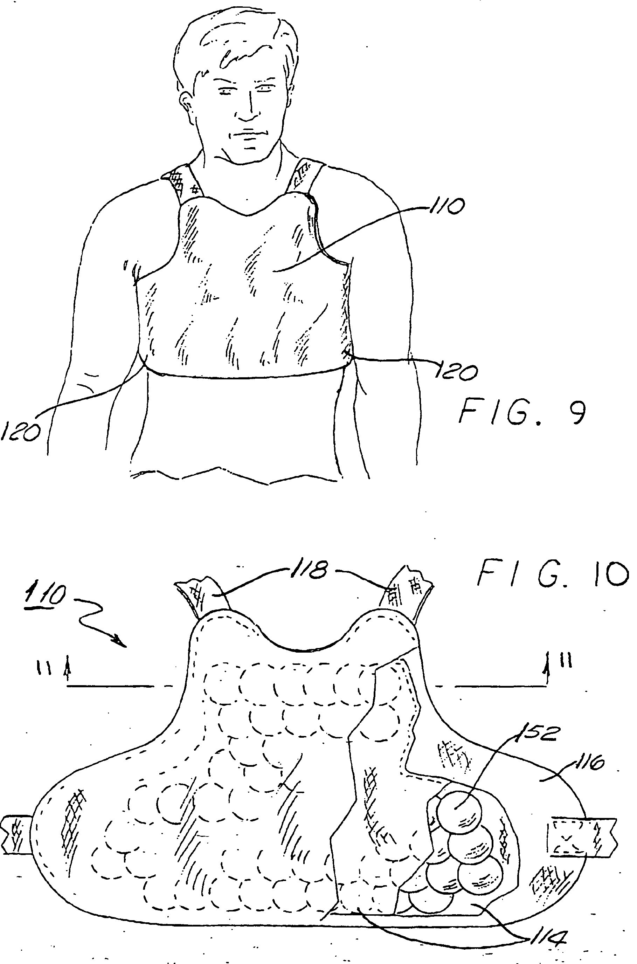

Figure 9 is a frontal view of a suit of body armor as worn in one embodiment of the instant invention. The body armor 110 covers a user's torso and is designed to protect the vital areas from high-velocity projectiles. Flaps 120 on the body armor extend around the wearer's body to extend protection to the wearer's sides. In one embodiment the body armor wraps around a segment of the wearer, for instance the torso, providing substantially uniform armor protection in a enveloping circumference.

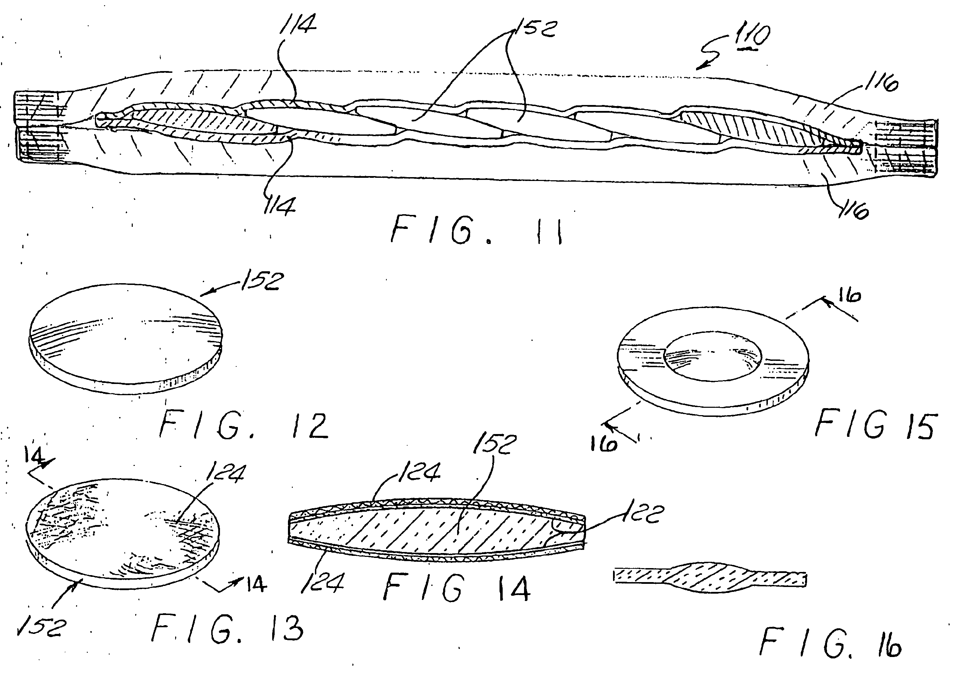

Figure 10 is a cutaway frontal view of one embodiment of a suit of body armor. Disks 152 are arrayed in an imbricated pattern to cover vital areas where the body armor is worn. Unlike the 10 x 12 rigid plates of the prior art, the imbricated pattern can flex around body contours and is therefore considerably more comfortable and also more readily concealable. Each disk 152 is formed of a high hardness material. In one embodiment, each disk is discus shaped having a maximum thickness in the center of the disk and declining in thickness towards the outer edge by providing one or more downwardly inclined surface segments. In one embodiment, the thickness of the discus shaped disk declines in a uniform downward inclined slope from the center towards the outer edge. In another embodiment the discus shape has an internal circumference within which the disk is uniformly thick and slopes uniformly downward between the internal circumference and the circumferential edge of the disk.

Typically, the edge thickness will be approximately one-half the thickness in the center. As such, when laid out in the imbricated pattern the disks exhibit a pivot capability which allows on the order of 60% greater flexibility than metal plates or existing coin arrangements. Many such suitable ceramic materials exist which are also of relatively lighter weight when compared to steel or other high hardness metals.

The tapering design intrinsic to the discus shape of one embodiment of the invention renders the disk surface non-planar, providing a slope to deflect ballistic impacts as compared with a uniform flat planar surface. In this regard, the ceramic composite material can be sintered and/or molded into a homogenous ballistic grade discus shape more easily and less expensively than can a metal disk, which must either be lathed or tooled to produce a similar tapering discus form. However, discus shaped metal disks are within the scope and contemplation of the invention. Through appropriately laying out disks in an imbricated pattern, the overall body armor 110 remains flexible and also provides good protection against high velocity projectiles.

Additionally, the lighter weight and greater flexibility of the ceramic composite as compared to prior art protection from high velocity projectiles, allows for greater mobility and range of motion by the wearer. For instance, body armor vests composed of imbricated ceramic disks of ballistic grade hardness and fracture toughness may wrap entirely around a segment of the wearer, for instance the torso, extending disk protection up to 360 degrees about the wearer. The lighter ceramic material also avoids pronounced negative buoyancy of high hardness metal coins or plates typical of prior art body armor. This provides for climbing or swimming uses in the field for which prior art body armor is not suitable.

In this embodiment also, to arrange the imbricated pattern, the disks are laid out from left to right. Each subsequent row is also laid out left to right. It has been found that switching from left to right, then to right to left, creates weakness in the resulting pattern that often causes failure. Disks within each row form a substantially straight horizontal line. Because the disks overlap, each disk lies on a slight tilting slope relative to a line normal to the horizontal layout surface. In one embodiment, this slight slope of the disks complements their inclined discus shape to increase the probability of impact deflection.

After the disks are laid out from left to right and top to bottom and sandwiched between a pair of adhesive layers, the entire pattern is inverted for assembly into body armor. It has been found that the majority of threats arrive at a downward trajectory. Thus it is desirable that each row of disks overlap the row below it as the armor is worn. It is, however, within the scope and contemplation of the invention to lay out the disks in an alternative order, e.g. right to left, bottom to top. It is also contemplated that inverting the imbricated pattern in the course of assembling the body armor -may be connected such that each row overlaps the row above it.

A number of possible ceramic composites have been found suitable as high hardness materials for the disks. These include fiber induced ceramics sold under the trademarks SINTOX® FA and DERANOX® by Morgan Matroc, Ltd. of Bedforshire, England. In particular, SINTOX® FA alumina oxide ceramic and DURANOX® D995L, for a zirconia toughened alumina oxide ceramic composite, composed of approximately 88% by weight alumina plus approximately 12% by weight transformation toughened zirconia (TTZ), have proven suitable ceramic composites.

While alumina based composites are preferred, other bases may be utilized to form the ceramic composite including barium titanate, strotium titanate, calcium zirconate, magnesium zirconate, silicon carbides and boron carbides. As indicated, these potential ceramic bases are not limited to oxide ceramics but also include mixed oxides, non-oxides, silicates as well as MICATHERM® ceramics, (the latter being a trademark for inorganic thermoplastic materials sold by Morgan Matroc, Ltd. of Bedforshire, England).

Suitable ceramic composites would have relatively high hardness and fracture toughness. Typically, such materials would have at least approximately 12 GPa in hardness and at least 3.5 MPa m^{1/2} in fracture toughness in order for the armor to withstand a level three ballistic event as defined by the National Institute of Justice (NIJ). A level three threat is a full metal jacket 7.62x51 mm 150 grain round traveling at 823,5 - 854 ^{cm}/_{sec} (2700-2800 ft./sec.) Ultimately, hardness and fracture toughness levels will depend on the type of ceramic composite employed. For exemplary embodiments of the present invention using alumina bases, the fracture toughness minimum for alumina would be 3.8 MPa m^{1/2} and 4.5 MPa m^{1/2} for zirconia toughened alumina. The hardness for alumina would be in the approximate range of 12 to 15 GPa, and for zirconia toughened alumina, the hardness would be at least approximately 15 GPa.

In certain instances, the ceramics employed may be supplemented by the addition of a toughening agent such as toughened metallic oxides. In one embodiment, TTZ is added to the alumina base. The inclusion of metallic oxides increase the strength of the resulting ceramic composite and resist disassociation of the disk upon impact during a ballistic event. For alumina based ceramic composites, the range of TTZ percentage by weight for suitable ballistic grade ceramics would be between 0.05% and 20%. In one embodiment the percentage of TTZ by weight to the alumina base is approximately 12% of the composite.

The ceramics are mixed in ways commonly known in the art. Sintering and molding, including injection molding, methods to form the disk are well known in the art. In one embodiment, the disks may be formed by injection molding and then pressing to the desired shape. Once formed, certain embodiments of the disks are then encompassed with a containment wrap material. This material provides greater integrity to the disk and increases its fracture toughness, consequently enhancing its ability to absorb the impact of ballistic projectiles without disassociation. In one embodiment, this wrap is a glass fiber wrap adhered by an adhesive substrate. Suitable glass fiber materials include Eglass and S-2 Glass available from Owens Corning Fiberglas Technology, Inc. of Summit, Illinois. Suitable adhesives include modified epoxy resins. The containment wrap and epoxy resin substrate can be applied to the disk by autoclaving, or in other ways known to the art. Strength, cohesion and structural integrity may also be imparted by overlaying the disk surface with aramid fibers, layered or cross-laid on an adhesive substrate.

Typically, disk 152 has a radius between 12.7mm (1/2") and 25.4mm (1"). Longer radii reduce flexibility but also manufacturing cost. In a current embodiment, a 25.4 mm (1") radius is employed. Each disk tapers in thickness varying between its center region (where the thickness is at its maximum) and its edge (where the thickness is at a minimum). Maximum and minimum thicknesses will vary according to the level of ballistic threat to be defeated. For instance, to defeat a high velocity rifle ballistic threat, a maximum thickness of 9.53mm (3/8") in the center tapering to 3.51mm (3/20") minimum thickness at the edge may be used. A low velocity rifle threat (or a high velocity pistol threat) may only require a thickness of between 3.18mm (1/8") (maximum) and 2.54mm (1/10") (minimum). In one embodiment, the discus shaped disks have a center thickness of approximately 6.36 mm (1/4") and an edge thickness of 3.18 mm (1/8").

The overlap of the imbricated placement pattern has been found to effectively spread the force of a high-velocity projectile hit to adjacent disks, thereby preventing penetration and backside deformation. Additionally, because of the slight tilt of each overlapping disk in the imbricated pattern, a perpendicular hit is very unlikely and some of the energy will be absorbed in deflection. In the discus embodiment, the tapering of thickness, forming a non-planar inclined surface renders a perpendicular strike extraordinarily unlikely.

Figure 11 shows an imbricated pattern of disks 152 coupled to a substrate. As previously discussed, substrate could be an adhesive impregnated polyethylene or aramid fiber fabric. The same fabrics discussed above are suitable for use with the ceramic discs. Layout on the adhesive substrates is also analogous.

Figure 12 is a perspective view of a disk. In this embodiment, the disk has a discus shape of varying thickness 6,35 mm (1/4") in the center tapering with a uniform slope to 3,19 mm (1/8") at the circumferential edge. In an imbricated pattern, edges of adjacent disks will overlap, creating areas of significant thickness having multiple disk layers. Ordinarily, this pattern will not overlap the center, or thickest region, of the disk. Thus, a projectile striking the disk pattern at any point will impact either a singular disk near its thickest region, or multiple layered disks at least as thick, and likely thicker, than the thickest region of the singular disk. Moreover, the slope of the discus shape between areas of varying thickness discourage any perpendicular ballistic impact.

Figure 13 shows a perspective view of a disk after application of a containment wrap. As noted above, this wrap may be a fiberglass or aramid fiber composite adhered to a substrate which may be a modified epoxy resin. The wrap imparts greater fracture toughness and hardness, reducing disk shatter and disassociation in response to a ballistic event.

Figure 14 shows a cross section of a disk illustrating its discus shape. - The layers of adhesive 122 and containment wrap 124, as noted above, are evident.

Figure 15 is a perspective view of a disk of an alternative embodiment of the invention. In this embodiment, formation of the disk is substantially as described above, varying only in the slope of the end result. While varying in thickness from the center to the edge, the slope of tapering is not uniform, leaving a more pronounced bulging center having a domed shape. This leaves the surface area extending from the circumference edge to the domed center substantially planar. This embodiment allows for the disks to have a greater overlapped surface area, increasing the surface area in which a projectile would encounter multiple layers of disk. However, the substantially planar region increases the probability of a perpendicular strike. The domed disks can be laid out in an analogous manner to that described above and assembled into body armor capable of defeating level three threats.

Figure 16 is a side view of the alternative embodiment shown in Figure 6.

## Claims

1. A method of making flexible body armor (10) to defeat a high-velocity projectile, the method comprising:
providing a high hardness material sheet; and
cutting a disk (52) having a radius; **characterized by**
milling the disk (52) in a plurality of places each having a radius of curvature equal to a radius of curvature of the disk (52).

2. The method of claim 1 wherein the sheet has a hardness greater than approximately 450 Brinell, and one disk (52) a radius in the range of approximately 12.7mm (1/2") to approximately 50.8mm (2").

3. The method of claim 1 further comprising:
repeating the cutting and milling a plurality of times to produce a plurality of milled disks (52);
laying out the plurality of milled disks (52) in an imbricated pattern (12); and
adhering a high tensile strength substrate (80) to a first side of the imbricated pattern (12).

4. The method of claim 3 wherein in the imbricated pattern (12) a first disk (52) of the plurality is overlapped by three additional disks (52) of the plurality, one in each milled place such that each milled place is substantially entirely covered by a full thickness portion of the overlapping disk (52).

5. The method of claim 2 wherein the material sheet has a thickness in the range of approximately 2.54mm (.100") to 4.75mm (.187").

6. The method of claim 3 further comprising:
enveloping the imbricated pattern (12) between the substrate (80) and a second layer of flexible, high tensile strength material; and
coupling the substrate (80) and imbricated pattern (12) to a soft body armor backing (16).

7. The method of claim 1 further comprising:
curving the disk (52) about an axis intersecting a mill arc of one milled place.

8. The method of claim 1 further comprising:
pressing the disk (52) to be convexed toward a surface including the milled places.

9. The method of claim 3 wherein laying out comprises:
placing a subset of the plurality of disks (52) in a substantially straight row originating from a first direction with each disk (52) rotated slightly such that an axis bisecting a central milled place (58) is not at a 90° angle with a central axis of the row; and
placing successive overlapping rows originating from the first direction.

10. An apparatus comprising a flexible body armor (10) to defeat a high velocity projectile, **characterized by**:
a first disk (52) milled in a plurality of places (54, 56, 58), each milled place (54, 56, 58) having a radius of curvature approximately equal to the radius of the disk (52), each specific milled place having a mill distance from an apex of the milled arc to the edge of the disk (52).

11. The apparatus of claim 10 wherein the hardness is greater than 450 Brinell, the radius is in the range of 12.7mm (.5") to 50.8mm (2") and the thickness is in the range of approximately 2.54mm (.100") to 4.75mm (.187")

12. The apparatus of claim 10 wherein the disk is approximately 25.4mm (one inch) in radius and the mill distance for a right milled (56) and left milled (54) place being approximately 13.7mm (.54") and the mill distance for a central milled place (58) being approximately 12.7mm (.50").

13. The apparatus of claim 10 further comprising:
a plurality of additional disks (52) substantially identical in dimension to the first disk (52); and
a tear and cut resistant adhesive substrate (80) adhering the disks (52) in an imbricated pattern (12).

14. The apparatus of claim 13 wherein the plurality of milled places include a right milled place (56) a left milled place (54), and a central milled place (58), and wherein the imbricated pattern (12) is such that a first disk (52) is overlapped in the right milled place (56) and left milled place (54) by a second disk and a third disk, respectively, and the left milled place (54) of the second disk (52) and the right milled place (56) of the third disk (52) defined in conjunction with the central milled (58) place of the first disk (52) an arc (60) into which a fourth disk (52) is seated, such that the fourth disk (52) overlaps the central milled (58) place of the first disk (52), the left milled place (54) of the second disk (52), and the right milled place (56) of the third disk (52).

15. The apparatus of claim 10, further comprising:
a soft body armor backing 916) coupled to the substrate (80).

16. The apparatus of claim 13 wherein a 7.62 x 51 mm 150 grain full metal jacket projectile traveling 823 to 853 m/s (2700-2800 feet/second) will not penetrate the soft body armor backing (16) and causes less than 44mm (1.73") of backside deformation.

17. The apparatus of claim 10 wherein the disk (52) s curved about an axis intersecting one milled arc.

18. The apparatus of claim 10 wherein the disk (52) is convex in a direction of a surface containing the milled places.

19. The apparatus of claim 13 wherein a first subset of the plurality are arranged in a first row with each successive disk (52) of the first subset overlapping a milled place of a preceding disk (52) of the first subset and a second subset of the plurality are arranged in a second row such that the second row overlaps the first row and each successive disk (52) of the subset overlaps a milled place and a preceding disk (52) of the second subset and wherein the first row and second rows both originate from a same direction.

## Patentansprüche

1. Verfahren zur Herstellung eines flexiblen Körperschutzpanzers (10) zur Abwehr eines Hochgeschwindigkeitsprojektils, wobei eine hochharte Metallschicht vorgesehen und eine Scheibe (52) mit einem Radius ausgeschnitten wird,
**dadurch gekennzeichnet,**
**dass** die Scheibe (52) an einer Vielzahl von Stellen abgetragen wird, wobei jede Stelle einen Krümmungsradius aufweist, der dem Krümmungsradius der Scheibe (52) entspricht

2. Verfahren nach Anspruch 1,
**dadurch gekennzeichnet,**
**dass** die Metallschicht eine größere Härte als etwa 450 Brinell aufweist und
**dass** eine Scheibe (52) einen Radius im Bereich von etwa 12,7mm (0,5") bis etwa 50,8mm (2") aufweist.

3. Verfahren nach Anspruch 1,
**dadurch gekennzeichnet,**
**dass** das Ausschneiden und Abtragen mehrere Male wiederholt wird, um eine Vielzahl von abgetragenen Scheiben (52) zu erzeugen, dass die Vielzahl von Scheiben (52) in einem dachziegelartig übereinandergelegten Muster (12) ausgelegt wird und dass ein hochdehnfähiges Substrat auf einer ersten Seite des Musters (12) angeklebt wird.

4. Verfahren nach Anspruch 3,
**dadurch gekennzeichnet,**
**dass** im Muster (12) eine erste Scheibe (52) der Vielzahl von Scheiben von drel weiteren Scheiben (52) der Vielzahl von Scheiben überlappt wird, und zwar eine an jeder abgetragenen Stelle derart, dass jede abgetragene Stelle im Wesentlichen vollständig durch einen vollstarken Teil der überlappenden Scheibe (52) bedeckt wird.

5. Verfahren nach Anspruch 2,
**dadurch gekennzeichnet,**
**dass** die Metallschicht eine Stärke aufweist, die im Bereich von etwa 2,54mm (0,1") bis 4,75mm (0,187") liegt.

6. Verfahren nach Anspruch 3,
**dadurch gekennzeichnet,**
**dass** das Muster (12) zwischen dem Substrat (80) und einer zweiten Schicht aus hochdehnfähigem Material eingehüllt wird und dass das Substrat (80) und das Muster (12) mit einer Weichkörper-Panzerverstärkung (116) gekoppelt werden.

7. Verfahren nach Anspruch 1,
**dadurch gekennzeichnet,**
**dass** die Scheibe (52) um eine Achse gebogen wird, die einen Abtragungsbogen einer abgetragenen Stelle schneidet.

8. Verfahren nach Anspruch 1,
**dadurch gekennzeichnet,**
**dass** die Scheibe (52) derart gepresst wird, dass sie in Richtung einer Fläche nach außen gewölbt wird, die die abgetragenen Stellen aufweist.

9. Verfahren nach Anspruch 3,
**dadurch gekennzeichnet,**
**dass** das Auslegen folgende Schritte aufweist:
- eine Untermenge der Vielzahl von Scheiben (52) wird in einer aus einer ersten Richtung beginnenden, im Wesentlichen geraden Reihe angeordnet, wobei jede Scheibe (52) derart leicht gedreht wird, dass eine eine zentrale, abgetragene Stelle (58) halbierende Achse nicht einen Winkel von 90° zu einer Zentralachse der Reihe bildet, und
- die aus der ersten Richtung ausgehenden, sich überlappenden Reihen werden nacheinander gelagt.

10. Vorrichtung mit einem flexiblen Körperschutzpanzer (10) zur Abwehr eines Hochgeschwindigkeitsprojektils,
**gekennzeichnet durch**
eine erste Scheibe (52), bei der eine Vielzahl von Stellen abgetragen sind, wobei jede abgetragene Stelle einen Krümmungsradius aufweist, der dem Krümmungsradius der Scheibe (52) entspricht, und wobei jede einzelne, abgetragene Stelle einen Abtragungsabstand zwischen einem Scheitel des Abtragungsbogens und der Kante der Scheibe (52) aufweist.

11. Vorrichtung nach Anspruch 10,
**dadurch gekennzeichnet.**
**dass** die Härte größer als etwa 450 Brinell ist, der Radius im Bereich von etwa 12,7mm (0,5") bis etwa 50,8mm (2") liegt und die Stärke Im Bereich von etwa 2,54mm (0,1"") bis 4,75mm (0,187") liegt.

12. Vorrichtung nach Anspruch 10,
**dadurch gekennzeichnet,**
**dass** die Scheibe einen Radius von etwa 25,4mm (1") aufweist, dass der Abtragungsabstand für eine rechts abgetragene Stelle (56) und eine links abgetragene Stelle (54) etwa 13,7mm (0,54") und der Abtragungsabstand für eine zentrale, abgetragene Stelle (58) etwa 12,7mm (0,5") beträgt.

13. Vorrichtung nach Anspruch 10,
**dadurch gekennzeichnet,**
**dass** eine Vielzahl von weiteren Scheiben (52) vorgesehen ist, die jeweils eine mit der Abmessung der ersten Scheibe (52) identische Abmessung aufweisen, und dass ein relß- und schnittfestes Klebesubstrat (80) vorgesehen ist, an das die Scheiben (52) in einem dachziegelartig übereinandergelegten Muster (12) angeklebt sind.

14. Vorrichtung nach Anspruch 13,
**dadurch gekennzeichnet,**
**dass** die Vielzahl von abgetragenen Stellen eine rechts abgetragene Stelle (56), eine links abgetragene Stelle (54) und eine zentral abgetragene Stelle (58) aufweist und dass das Muster (12) derart ausgebildet ist, dass eine erste Scheibe (52) an der rechts abgetragenen Stelle (56) und an der links abgetragenen Stelle (54) durch eine zweite Scheibe bzw. durch eine dritte Scheibe überlappt ist und dass die links abgetragene Stelle (54) der zweiten Scheibe (52) und die rechts abgetragene Stelle (56) der dritten Scheibe (52) in Verbindung mit der zentral abgetragenen Stelle (58) der ersten Scheibe (52) einen Bogen (60) bilden, in den eine vierte Scheibe (52) derart angeordnet ist, dass die vierte Scheibe (52) die zentral abgetragene Stelle (58) der ersten Scheibe (52), die links abgetragen Stelle (54) der zweiten Scheibe (5,2) und die rechts abgetragene Stelle (56) der dritten Scheibe (52) Qbedappt.

15. Vorrichtung nach Anspruch 10,
**dadurch gekennzeichnet,**
**dass** eine Weichkörper-Panzerverstärkung (116) mit dem Substrat (80) gekoppelt ist.

16. Vorrichtung nach Anspruch 13,
**dadurch gekennzeichnet,**
**dass** ein Metallmantelprojektil, das 7,62X51mm groß ist, mit 150 Kömem gefüllt ist und eine Geschwindigkeit von 823-853m/s (2700-2800 Fuß/Sekunde) aufweist, nicht die Weichkörper-Panzerverstärkung (116) durchschlägt und eine Deformation der Rücksite von weniger als 44mm (1,73") verursacht.

17. Vorrichtung nach Anspruch 10,
**dadurch gekennzeichnet,**
**dass** die Scheibe (52) um eine Achse gebogen ist, die einen Abtragungsbogen schneidet.

18. Vorrichtung nach Anspruch 10,
**dadurch gekennzeichnet,**
**dass** die Scheibe (52) nach außen in Richtung einer Fläche gebogen ist, die die abgetragenen Stellen aufweist.

19. Vorrichtung nach Anspruch 13,
**dadurch gekennzeichnet,**
**dass** eine Untermenge der Vielzahl von Scheiben (52) in einer ersten Reihe angeordnet ist, wobei jede folgende Scheibe (52) der ersten Untermenge eine abgetragene Stelle einer vorhergehenden Scheibe (52) der ersten Untermenge überlappt, dass eine zweite Untermenge in einerzweiten Reihe derart angeordnet ist, dass die zweite Reihe die erste Reihe überlappt und Jede folgende Scheibe (52) der Untermenge eine abgetragene Stelle und eine vorhergehende Scheibe (52) der zweiten Untermenge überlappt, und dass die erste Reihe und die zweite Reihe aus einer gleichen Richtung beginnen.

## Revendications

1. Procédé pour fabriquer un gilet pare-balles flexible (10) pour arrêter un projectile grande vitesse, le procédé comprenant les étapes consistant à :
prévoir une feuille de matériau de très haute dureté ; et
découper un disque (52) ayant un rayon ; **caractérisé par**
le fraisage du disque (52) en une pluralité d'emplacements ayant chacun un rayon de courbure égal au rayon de courbure du disque (52).

2. Procédé selon la revendication 1, dans lequel la feuille possède une dureté supérieure à environ 450 Brinell, et un disque (52) présente un rayon compris dans une plage allant d'environ 12,7 mm (1/2") à environ 50,8 mm (2").

3. Procédé selon la revendication 1, comprenant en outre les étapes consistant à :
répéter la découpe et le fraisage une pluralité de fois pour produire une pluralité de disques fraisés (52) ;
disposer la pluralité de disques fraisés (52) selon un motif imbriqué (12) ; et
coller un substrat à haute résistance à la traction (80) sur un premier côté du motif imbriqué (12).

4. Procédé selon la revendication 3, dans lequel, dans le motif imbriqué (12), un premier disque (52) de la pluralité est recouvert partiellement par trois disques supplémentaires (52) de la pluralité, un en chaque emplacement fraisé, de sorte que chaque emplacement fraisé soit sensiblement entièrement recouvert par une portion d'épaisseur totale du disque de chevauchement (52).

5. Procédé selon la revendication 2, dans lequel ta feuille de matériau présente une épaisseur comprise dans une plage allant d'environ 2,54 mm (0,100") à 4,75 mm (0,187").

6. Procédé selon la revendication 3, comprenant en outre les étapes consistant à :
envelopper le motif imbriqué (12) entre le substrat (80) et une seconde couche de matériau flexible à haute résistance à la traction ; et
coupler le substrat (80) et le motif imbriqué (12) à une matière de renfort d'envers souple de gilet pare-balles (16).

7. Procédé selon la revendication 1, comprenant en outre l'étape consistant à :
incurver le disque (52) autour d'un axe croisant un arc de fraisage d'un emplacement fraisé.

8. Procédé selon la revendication 1, comprenant en outre l'étape consistant à :
presser le disque (52) pour le rendre convexe en direction d'une surface comprenant les emplacements fraisés.

9. Procédé selon la revendication 3, dans lequel la disposition comprend les étapes consistant à :
placer un sous-ensemble de la pluralité de disques (52) dans une rangée sensiblement droite provenant d'une première direction, chaque disque (52) étant tourné légèrement de sorte qu'un axe bissectant un emplacement fraisé central (58) ne soit pas à un angle de 90° par rapport à un axe central de la rangée ; et
placer des rangées successives se chevauchant provenant de la première direction.

10. Appareil comprenant un gilet pare-balles flexible (10) pour arrêter un projectile grande vitesse, **caractérisé par** ;
Un premier disque (52) fraisé en une pluralité d'emplacements (54, 56, 58), chaque emplacement fraisé (54, 56, 58) ayant un rayon de courbure approximatlvement égal au rayon du disque (52), chaque emplacement fraisé spécifique ayant une distance de fraisage allant d'un sommet de l'arc fraisé jusqu'au bord du disque (52).

11. Appareil selon la revendication 10, dans lequel la dureté est supérieure à 450 Brinell, le rayon est compris dans une plage allant de 12,7 mm (0,5") à 50,8 mm (2"), et l'épaisseur est
comprise dans une plage allant d'environ 2,54 mm (0,100") à 4,75 mm (0,187").

12. Appareil selon la revendication 10, dans lequel le disque fait un rayon d'environ 25,4 mm (un pouce), la distance de fraisage pour un emplacement fraisé droit (56) et un emplacement fraisé gauche (54) étant d'environ 13,7 mm (0,54"), et la distance de fraisage pour un emplacement fraisé central (58) étant d'environ 12,7 mm (0,50").

13. Appareil selon la revendication 10, comprenant en outre :
une pluralité de disques supplémentaires (52) de dimensions sensiblement identiques au premier disque (52) ; et
un substrat adhésif résistant aux déchirures et aux coupures (80) collant les disques (52) selon un motif imbriqué (12).

14. Appareil selon la revendication 13, dans lequel la pluralité d'emplacements fraisés comprend un emplacement fraisé droit (56), un emplacement fraisé gauche (54) et un emplacement fraisé central (58), et dans lequel le motif imbriqué (12) est tel qu'un premier disque (52) est recouvert partiellement à l'emplacement fraisé droit (56) et l'emplacement fraisé gauche (54) par un second disque et un troisième disque, respectivement, et l'emplacement fraisé gauche (54) du second disque (52) et l'emplacement fraisé droit (56) du troisième disque (52) définissent, conjointement avec l'emplacement fraisé central (58) du premier disque (52), un arc (60) dans lequel un quatrième disque (52) est logé, de sorte que le quatrième disque (52) recouvre partiellement l'emplacement fraisé central (58) du premier disque (52), l'emplacement fraisé gauche (54) du second disque (52) et l'emplacement fraisé droit (56) du troisième disque (52).

15. Appareil selon la revendication 10, comprenant en outre :
une matière de renfort d'envers souple de gilet pare-balles (16) couplée au substrat (80).

16. Appareil selon la revendication 13, dans lequel un projectile chemisé acier « full metal jacket » de 7,62 x 51 mm à 150 grains parcourant 823 à 853 m/s (2700 à 2800 pieds/seconde) ne peut pas pénétrer la matière de renfort d'envers souple de gilet pare-balles (16) et entraîne une déformation arrière inférieure à 44 mm (1,73").

17. Appareil selon la revendication 10, dans lequel le disque (52) est incurvé autour d'un axe croisant un arc fraisé.

18. Appareil selon la revendication 10, dans lequel le disque (52) est convexe en direction d'une surface contenant les emplacements fraisés.

19. Appareil selon la revendication 13, dans lequel un premier sous-ensemble de la pluralité est disposé dans une première rangée, chaque disque (52) successif du premier sous-ensemble recouvrant partiellement un emplacement fraisé d'un disque (52) précédent du premier sous-ensemble, et un second sous-ensemble de la pluralité est disposé dans une seconde rangée de sorte que la seconde rangée recouvre partiellement la première rangée et que chaque disque (52) successif du sous-ensemble recouvre partiellement un emplacement fraisé et un disque (52) précédent du second sous-ensemble, et dans lequel la première rangée et la seconde rangée proviennent toutes deux d'une même direction.
